# EUROPEAN PATENT APPLICATION

(11) **EP 1 038 836 A2**
(43) Date of publication of application: **27.09.2000**
(21) Application number: 00300756.4
(22) Date of filing: 01.02.2000
(51) Int. Cl.: C02F 1/461, C02F 1/469

(54) **Device for producing ion water**

(30) Priority: 23.03.1999 US 274527
(71) Applicant: Yamaoka, Tateki, Machida-shi, Tokyo (JP)
(72) Inventor: Yamaoka, Tateki, Machida-shi, Tokyo (JP)
(74) Representative: Midgley, Jonathan Lee

(57) **Abstract**

A device for producing ion water includes two partition walls to partition the electrolytic cell, having ion exchange membrane such that the electrolytic cell is partitioned in three pieces of electrolytic chambers therein, and the device also is provided spicery-supplying device such that ion water is produced inside at least one electrolytic chamber. In addition, the anode electrode is disposed at the intermediate electrolytic chamber, and cathode electrodes are disposed at the electrolytic chambers located at both sides in the electrolytic cell respectively. Therefore, the desired pH of the smell ion water can be controlled because the generative quantity of hydrogenous ion can be balanced by controlling the quantity of electricity of turning on electricity.

## Description

### BACKGROUND OF THE INVENTION

The present invention is related to a device for producing ion water which generates alkaline functional water (alkaline ion water) for healthy promotion and medical water (acid ion water) for sterilization or the like due to electrolyze influence water.

A conventional electrolyzing device of water is composed of an electrolytic cell disposed an ion exchange membrane at the central portion thereof; an anode electrode disposed into one of electrolytic chambers of the electrolytic cell; and a cathode electrode disposed into another electrolytic chamber in the electrolytic cell, and the electrolyzing of water is operated by the above-mentioned device.

By the conventional electrolysis using the ion exchange membrane, most electric charge movements are performed in a condition that cation moves from the anode electrodes to a cathode electrode. Further, in order not to cause contrary movement of hydroxide ion, a fall of pH of the acid ion water which has formed by the anode chamber is promoted markedly.

Additionally, when it is electrolyzed by equivalent quantity of water, the reaction in the cathode chamber includes a defect that pH of alkaline ion water is raised, and the smell alkaline ion water or acid ion water people prefer can not be produced.

### SUMMARY OF THE INVENTION

In view of the foregoing, it is an object of the present invention to provide a device for producing ion water that the desired pH of ion water can be controlled in order to take balance of hydrogenous-ion generative quantity by controlling of an amount of electricity of turning on electricity because an amount of turning on electricity is reduced be half. It is another object of the present invention to provide a device which can produce the alkaline ion water and acid ion water that are adhered to a prefered smell.

It is more specific object of the present invention to provide a device for producing ion water that the water which was introduced into the electrolytic cell can electrolyze it on pure ion water. Furthermore, it is still another object of the present invention to provide a device for producing ion water that the ion water raised ion density can be also produced.

The novel features which are believed to be characteristic of the invention, both as to its organization and method of operation, together with further objects and advantages thereof, will be better understood from the following description considered in connection with accompanying drawings in which a presently preferred embodiment of the invention is illustrated by way of example. It is to be expressly understood, however, that the drawings are for the purpose of illustration and description only, and are not intended as a definition of the limits of the invention.

### BRIEF DESCRIPTION OF THE DRAWINGS

Fig. 1 is a plan view showing a first embodiment of the present invention;
Fig. 2 is a front view showing a first embodiment of the present invention;
Fig. 3 is an expanded cross sectional view taken along the line 3-3 of Fig. 1;
Fig. 4 is an exploded perspective view of a partition wall showing a first embodiment of the present invention;
Fig. 5 is a partial cut-off explanation view of a partition wall according to a first embodiment of the present invention;
Fig. 6 is an explanation view during electrolyzing according to a first embodiment of the present invention;
Fig. 7 is a plan view showing a second embodiment of the present invention;
Fig. 8 is an explanation view of an anode electrode showing a second embodiment of the present invention;
Fig. 9 is a plan view showing a third embodiment of the present invention;
Fig. 10 is an explanation view of an anode electrode showing a second embodiment of the present invention;
Fig. 11 is a plan view showing a fourth embodiment of the present invention;
Fig. 12 is an explanation view of an anode electrode showing a fourth embodiment of the present invention;
Fig. 13 is a plan view showing a fifth embodiment of the present invention;
Fig. 14 is an explanation view of a cathode electrode showing a fifth embodiment of the present invention;
Fig. 15 is a plan view showing a sixth embodiment of the present invention;
Fig. 16 is an explanation view of a cathode electrode showing a sixth embodiment of the present invention.
Fig. 17 is a plan view showing a seventh embodiment of the present invention;
Fig. 18 is a front view showing a seventh embodiment of the present invention;
Fig. 19 is a plan view showing an eighth embodiment of the present invention;
Fig. 20 is an expanded cross sectional view taken along the line 20-20 of Fig. 19;
Fig. 21 is an explanation view in a condition that the cathode electrode moves showing an eighth embodiment of the present invention;
Fig. 22 is a plan view showing a ninth embodiment of the present invention;
Fig. 23 is a front view showing a ninth embodiment of the present invention;
Fig. 24 is an expanded cross sectional view taken along the line 24-24 of Fig. 20;
Fig. 25 is an exploded perspective view of a partition wall showing a ninth embodiment of the present invention;
Fig. 26 is a plan view showing a tenth embodiment of the present invention;
Fig. 27 is a front view showing a tenth embodiment of the present invention;
Fig. 28 is an explanation view of an overflow water supplying device showing a tenth embodiment of the present invention;
Fig. 29 is a plan view showing an eleventh embodiment of the present invention;
Fig. 30 is a front view showing an eleventh embodiment of the present invention; and
Fig. 31 is an explanation view in a condition that a closure member is opened showing an eleventh embodiment of the present invention.

### DESCRIPTION OF THE PREFERRED EMBODIMENT

Preferred embodiments of the present invention will now be described in more detail below referring to the accompanying drawings.

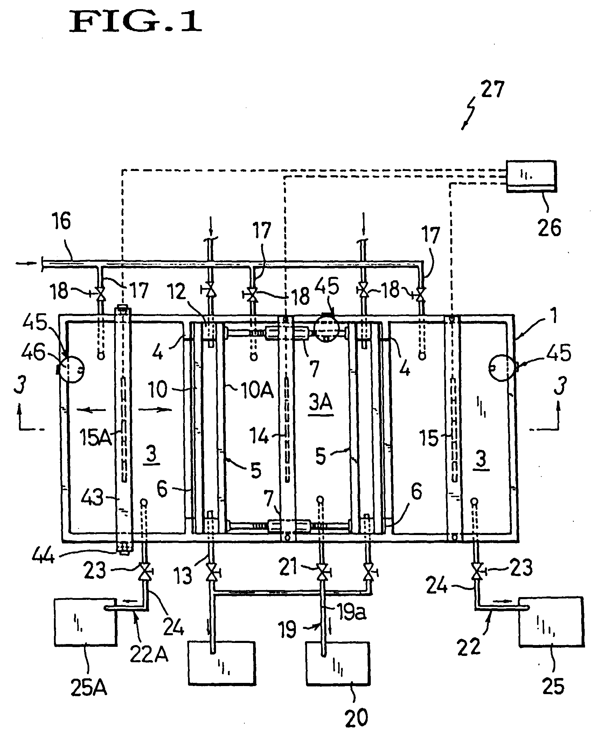

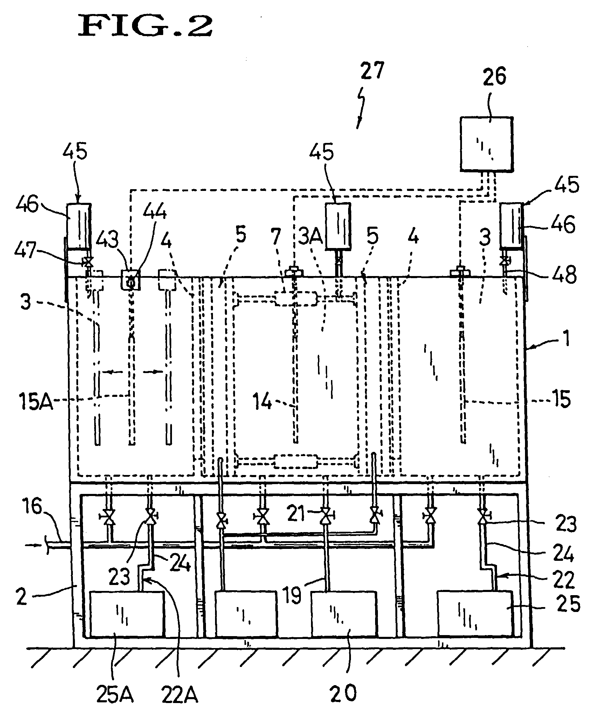

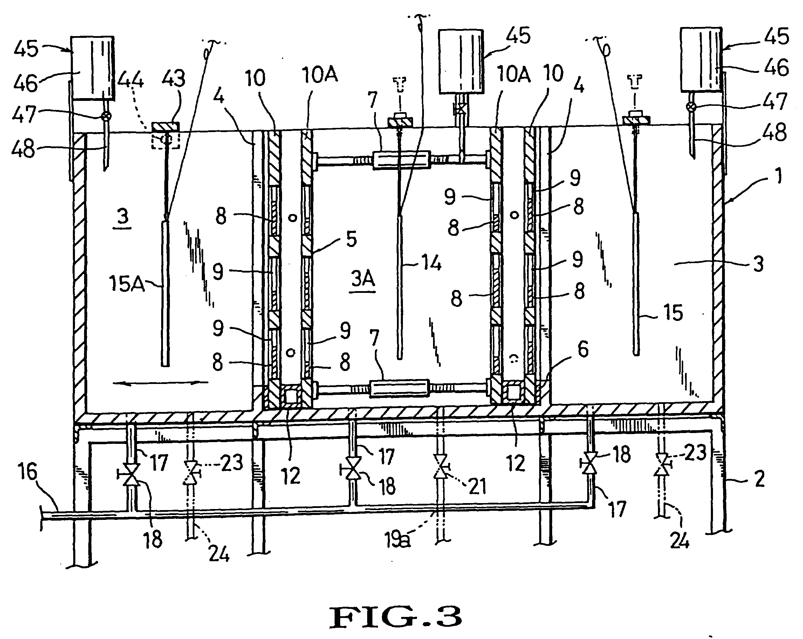

Figs. 1 to 6 illustrate in a first embodiment of the present invention wherein numeral 1 is an electrolytic cell which can electrolyze the water, the electrolytic cell 1 being established in an upper portion of a frame 2. Numeral 4,4 are support members which are formed at an inner wall surface of the electrolytic cell 1 such that the electrolytic cell 1 is partitioned on three pieces of electrolytic chambers 3, 3A, 3, respectively.

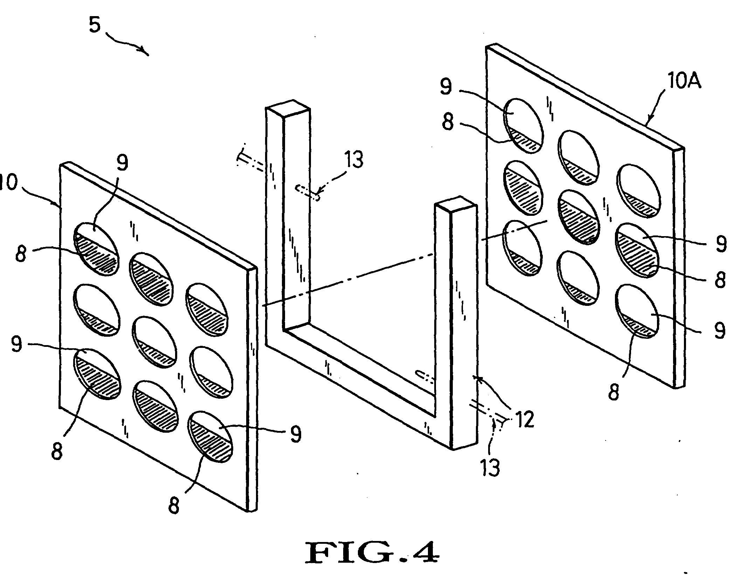

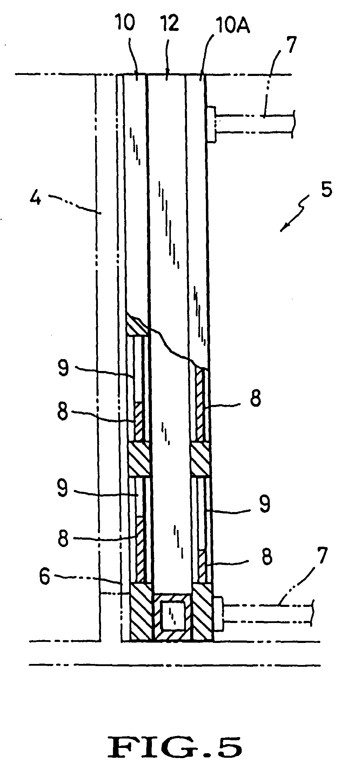

Numeral 5, 5 are two units of partition walls which are fixed by pressure with press tools 7, 7, 7 and 7 using four pieces of turn- buckle mechanism via seal materials 6, 6 to the support members 4, 4 which partition the electrolytic cell 1 on three pieces of the electrolytic chambers 3, 3A, 3. The partition walls 5, 5 as illustrated in Figs. 4 and 5 are composed of a pair of partition wall bodies 10, 10A; a framed body 12 in the shape of a channel; and a water supply equipment 13. The partition wall bodies 10, 10A are attached a plurality of anode exchange membranes 8 and a plurality of cathode exchange membranes 9 thereto, the partition wall bodies 10, 10A being supported by the support members 4,4. The framed body 12 is provided to form a water chamber 11 between the partition wall bodies 10, 10A. The water supply equipment 13 is discharged water or drinking water while they are supplied into the water chamber 11 formed into the framed body 12.

Numeral 14 is a non-movable anode electrode which is performed plating of platinum for the titanium board, the anode electrode 14 being established fixedly with the electrolytic cell 1 such that the anode electrode is positioned into the intermediate electrolytic chamber 3A of the electrolytic cell 1.

Numeral 15 is a non-movable cathode electrode which is established fixedly with the electrolytic cell 1 such that the cathode electrode 15 is positioned adjacent a central portion into the electrolytic chambers 3 of the electrolytic cell 1, the cathode electrode 15 being performed plating of platinum for the titanium board and being flowed half an electric current of the electric current which flows to the anode electrode 14 thereto.

Numeral 15A is a movable cathode electrode which is performed the titanium board with covering by platinum, the movable cathode electrode 15A being fixed to the electrolytic cell 1 in a condition that the cathode electrode 15A is allowed the setting position choose using a support member for the cathode electrode 43 fitted by locking bolts 44,44 such that the cathode electrode 15A can be positioned optionally into another electrolytic chamber 3 of the electrolytic cell 1. Also the cathode electrode 15A makes half amount of the electric current which flows to the anode electrode 14 flow thereto.

Numeral 16 is a decomposition water supplying equipment which supplies drinking water such as the water-service water or the like which is electrolyzed to each electrolytic chamber 3, 3A, 3 of the electrolytic cell 1 by branch pipes 17, 17, 17. The branch pipes 17, 17, 17 of the decomposition water supplying equipment 16 have opening and shutting valves 18, 18, 18 which are interposed between the branch pipes 17 and the separated water supplying equipment 16, respectively.

Numeral 19 is a collecting device of ion water which drains pure acid ion water generated by the intermediate electrolytic chamber 3A of the electrolytic cell 1 to an acid ion water storage tank 20 through an acid ion water drainpipe 19a having an opening and shutting valve 21.

Numeral 22,22A are collecting device of alkaline ion water which drains the pure alkaline ion water generated by the electrolytic chamber 3,3 located at both sides into the electrolytic cell 1 to an alkaline ion water storage tank 25 through an alkaline ion water drainpipes 24,24 having opening and shutting valves 23,23.

Numeral 26 is a voltage controller that controls the voltage to supply the amount of a desired electric current to the anode electrode 14, the non-movable cathode electrode 15 and movable cathode electrode 15A.

Numeral 45,45,45 are device for supplying spices that supplies liquid spices such as a flavor of orange, peach, lemon, tea, or the like into the intermediate electrolytic cell 3A and the electrolytic chambers 3,3 located at both side portions of the electrolytic cell 1, respectively. The spicery-supplying device 45 further comprises liquid spice storage tanks 46,46,46 and nozzles 48,48,48 having valves 47,47,47, the nozzles 48 being attached to the storage tank 46 and supplying the liquid spice from the storage tank 46 in a water-drop condition.

At start-up of the device for producing ion water 27 of the above-mentioned structure, the movable cathode electrode 15A is allowed it to position as equal as the distance between the anode electrode 14 and the non-movable cathode electrode 15 when the alkaline ion water is generated pH of it into each of electrolytic chambers 3,3 respectively into the electrolytic cell 1. On the other hand, the movable cathode electrode 15A is allowed it position such that the distance between the anode electrode 14 and the movable cathode electrode 15A is kept in a distance identified the distance between the anode electrode 14 and cathode electrode 15.

Then, the device 27 opens the opening and shutting valves 18, 18, 18 of the decomposition water supplying equipment 16, supplies a predetermined quantity of drinking water into the electrolytic chambers 3, 3A respectively, and closes the opening and shutting valves 18, 18, 18. In addition, water is supplied into the water chambers 11, 11 by the water supplying equipments 13, 13 of the partition walls 5, 5. In addition, the spice supplying device 45 supplies a drop or some drops of liquid spice into the chambers 3,3A,3.

Additionally, the liquid spice which is supplied into the electrolytic chambers 3,3A,3 may be used the same as a spice respectively. Also the different kind of the liquid spice may be used in the electrolytic chambers 3,3A,3, respectively.

Afterward, an electric current is flowed to the anode electrode 14, the non-movable cathode electrode 15 and movable cathode electrode 15A in a fixed time, and it is electrolyzed.

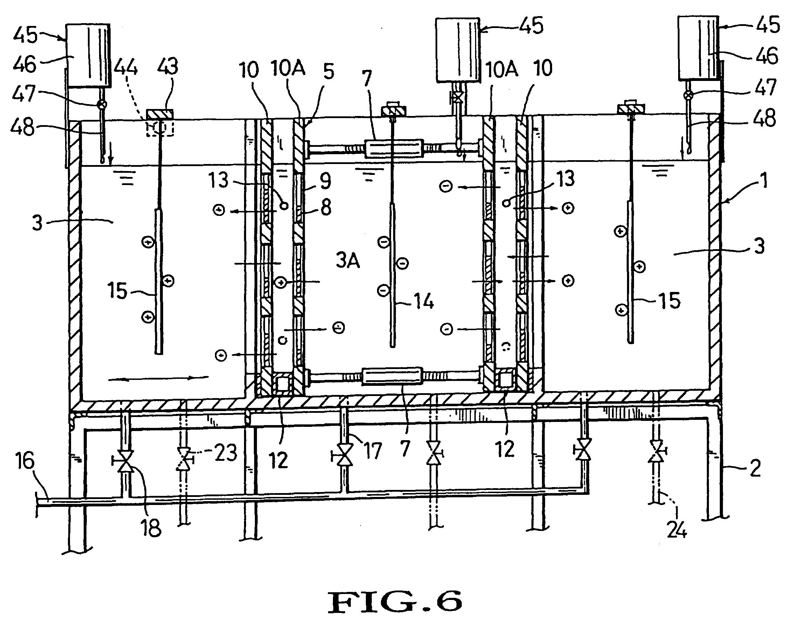

Then, the anion and cation which are moved electric charge by an electrolysis reaction are decomposed by the cation exchange membrane and the anion exchange membranes, and they are picked thereby. As illustrated in Fig. 6, the cation of the decomposed water in the intermediate electrolytic chamber 3A, having the anode electrode 14, of the electrolytic cell 1 passes the plurality of cation exchange membranes 8, 8 of a pair of partition wall bodies 10, 10A which are provided on partition walls 5, 5. The cation is introduced into the electrolytic chambers 3, 3, having the non-movable cathode electrode 15 and movable cathode electrode 15A, which are provided at both sides into the electrolysis cell 1.

Moreover, the anion in the decomposition water of the electrolytic chambers 3, 3, having the non-movable cathode electrode 15 and movable cathode electrode 15A, which are provided at both side portions into the electrolytic cell 1 passes through the plurality of the anion exchange membranes 9, 9 of the pair of partition wall bodies 10, 10A of the partition walls 5, 5. The anion is introduced into the electrolytic chamber 3A, having the anode electrode 14, which is provided at the central portion of the electrolytic cell 1.

In addition, the cation into the decomposition water such as water-service water, drinking water or the like which is supplied into the water chambers 11, 11 respectively located between the pair of partition wall bodies 10, 10A and 10, 10A of the partition walls 5, 5 is introduced into the electrolytic chambers 3, 3 located at both sides in the electrolytic cell 1. In addition, the anion is introduced into the intermediate electrolytic chamber 3A, and ion concentration is raised. Then, pure acid ion water, adhered to the smell, of pH at the rate 3.0 to 3.2 is generated into the intermediate electrolytic chamber 3A. Also pure alkaline ion water, adhered to the smell, of pH at the same rate 9.2 to 9.8 or the different rate 9.1 to 9.5 and 9.6 to 9.9 is also generated by the electrolytic chambers 3, 3 located at both sides in the electrolytic cell 1.

When acid ion and alkaline ion water which are adhered to the smell are generated in this way, the opening and shutting valve 21 of the acid ion water drainpipe 19 is opened, and the acid ion water is stored it up the acid ion water storage tank 20. Also the opening and shutting valves 23,23 of the alkaline ion water drainpipe 22,22A are opened, and the alkaline ion water is stored it up the alkaline ion water storage tanks 25,25A.

Furthermore, the water which is passed by the partition walls 5, 5 can be used as the spare water to produce pure water.

### DIFFERENT PREFERRED EMBODIMENTS OF THE INVENTION

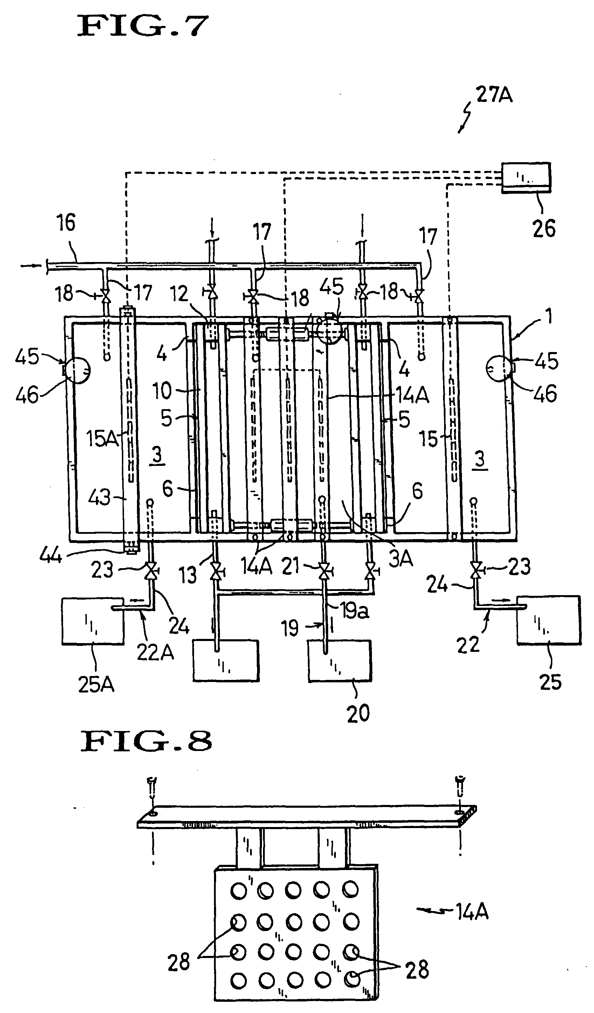

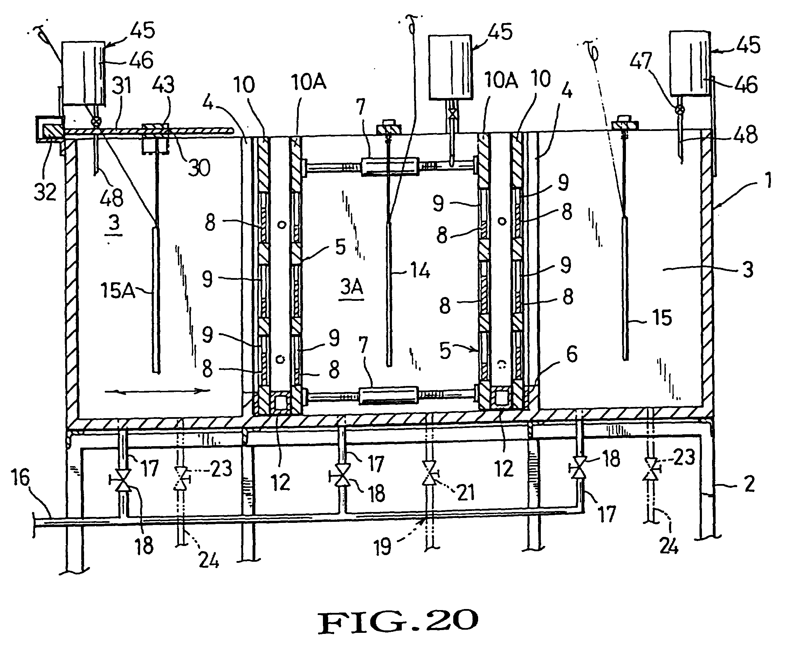

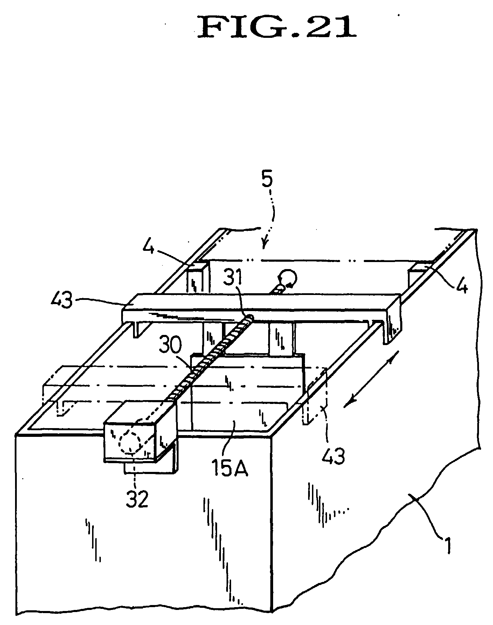

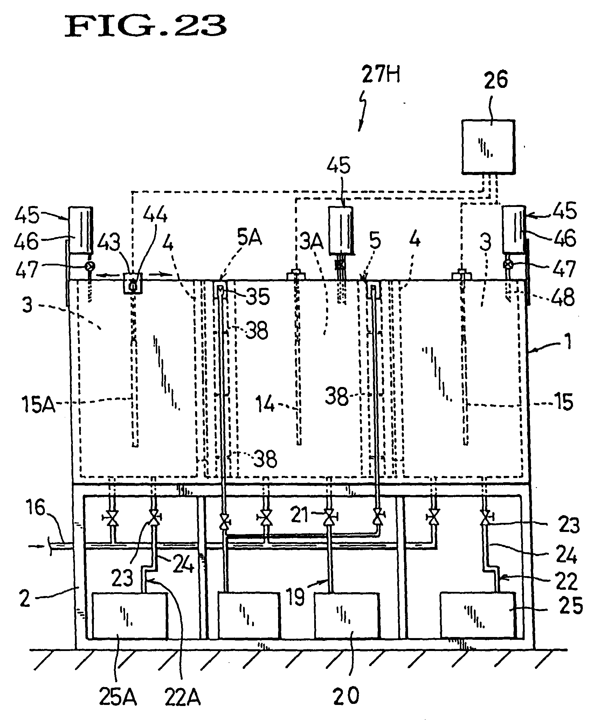

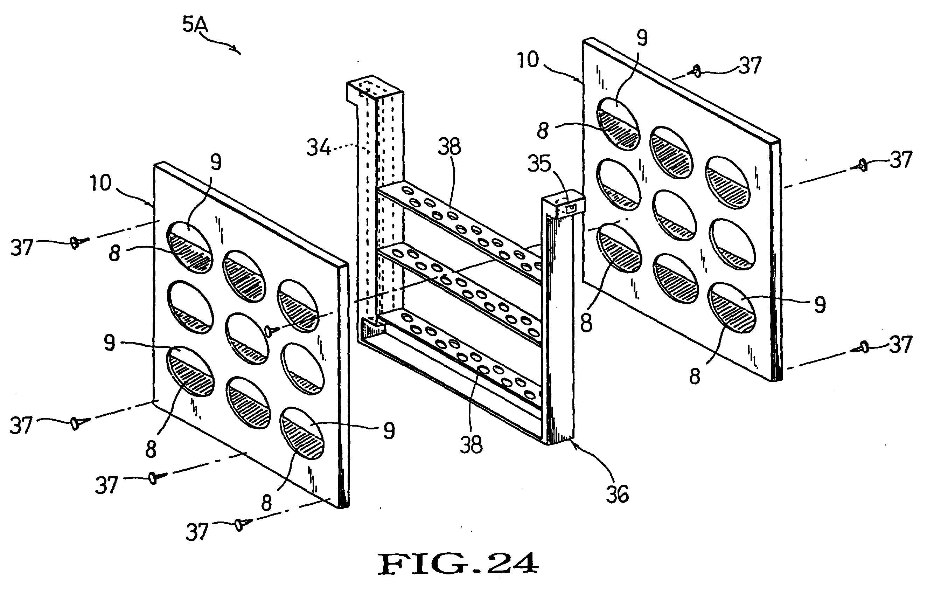

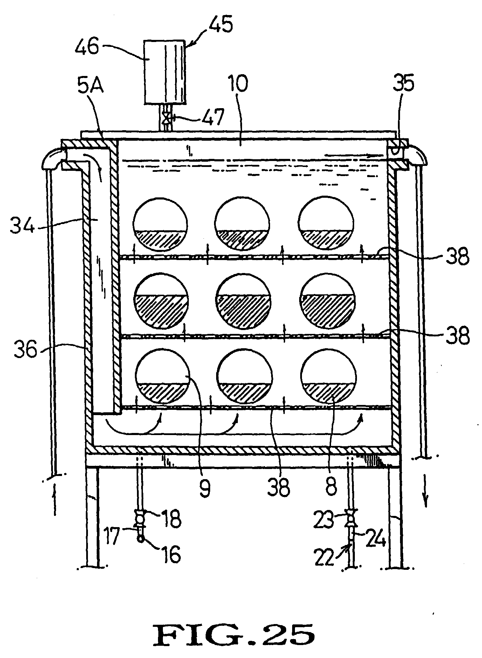

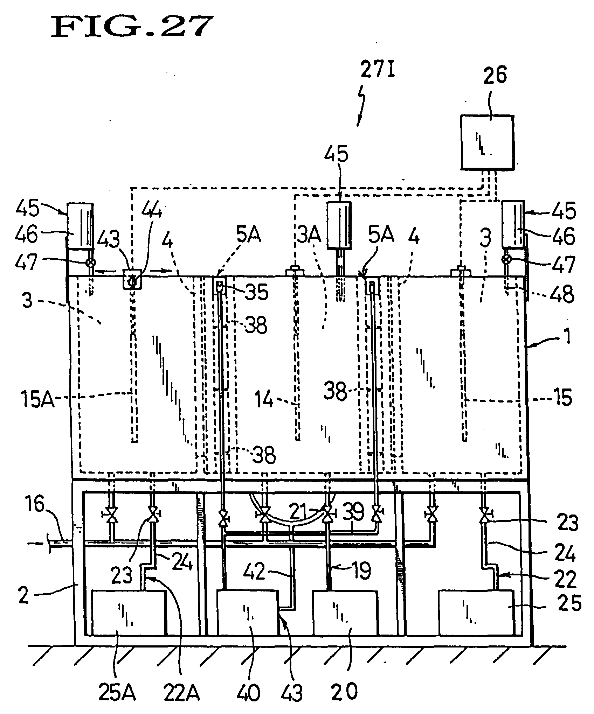

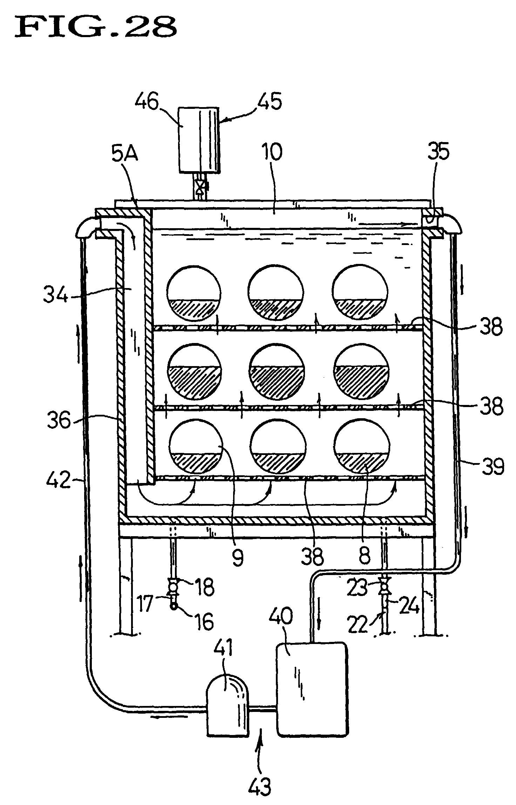

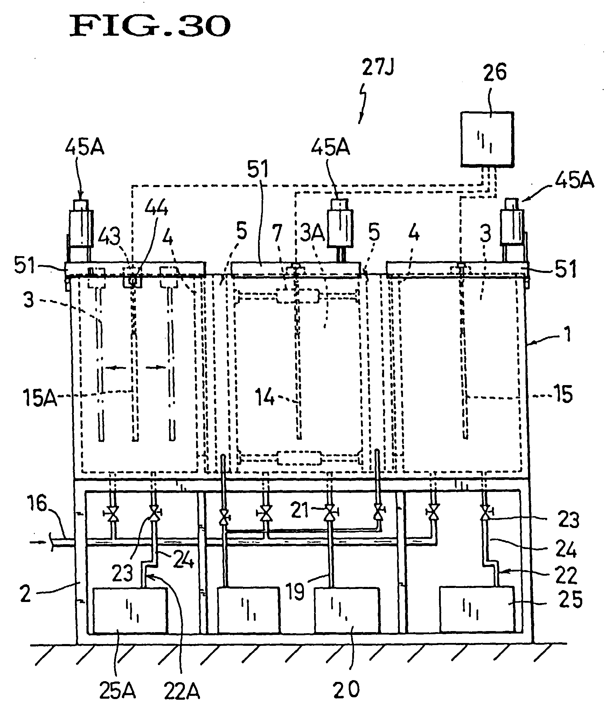

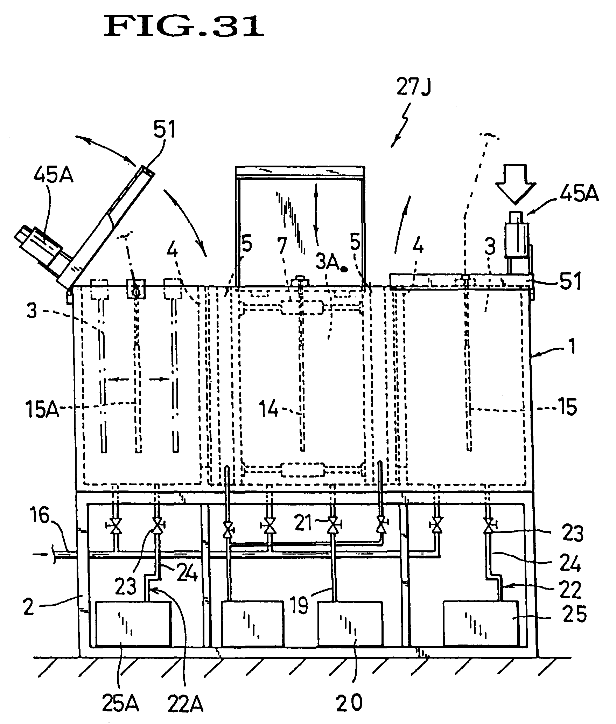

Other embodiments of the present invention will now be described referring to Figs. 7 to 31. Throughout the drawings of the embodiments, like components are denoted by like numerals as of the first embodiment and will not therefore be explained in greater detail.

Figs. 7 and 8 illustrate the second embodiment of the present invention; this is distinguished from the first embodiment in that at least two or more anode electrodes, three pieces of anode electrodes 14A, 14A, 14A in this embodiment of the present invention, which are performed plating of platinum for the titanium plate, having a plurality of holes 28, is made to stand in a row at a predetermined interval into the intermediate electrolytic chamber 3A of the electrolytic cell 1. Then, a rate of turning on electricity gets better due to compose of the above-mentioned structure. Moreover, it can be used on electrolysis of water including heavy metal. Also ion can move through the holes 28 of the anode electrodes 14A, 14A, 14A, and a device for producing ion water 27A can produce strong acid ion water and strong alkaline ion water easily.

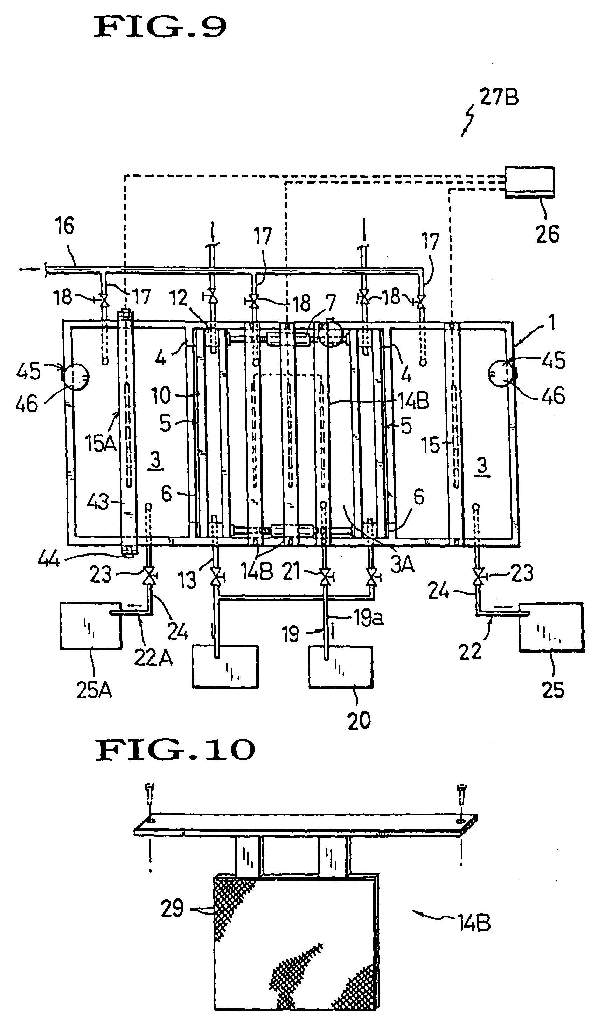

Figs. 9 and 10 illustrate the third embodiment of the present invention; this is distinguished from the second embodiment in that at least two anode electrodes, three pieces anode electrodes 14B, 14B, 14B in this embodiment of the present invention, which are woven and knitted a linear material 29 which is performed plating of platinum for a titanium plate and is formed on a mesh are made to stand in a row at a predetermined interval into the intermediate electrolytic chamber 3A of the electrolytic cell 1. A device for producing ion water 27B according to the third embodiment will provide the same function as of the second invention.

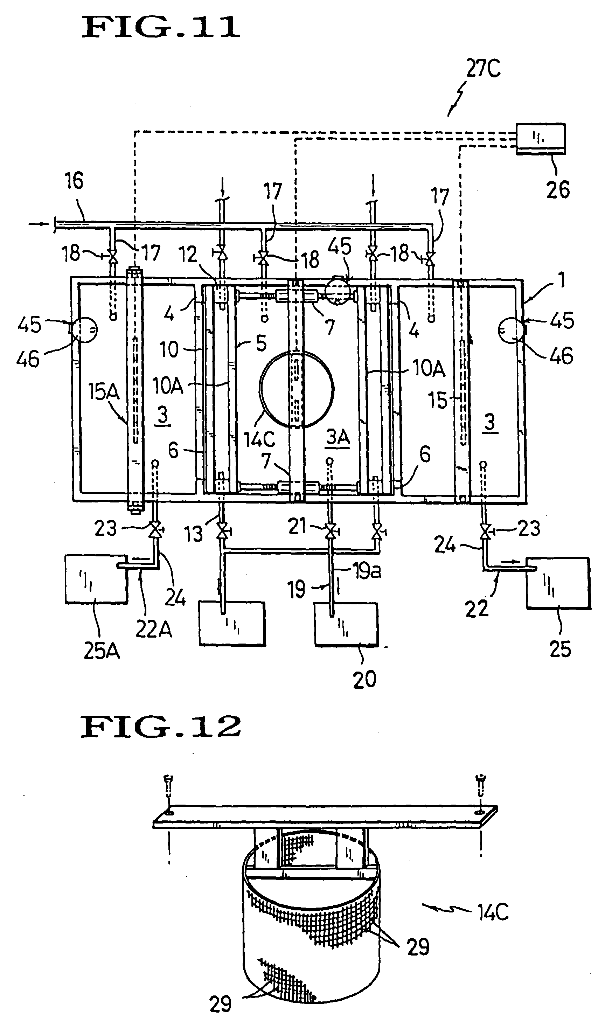

Figs. 11 and 12 illustrate the fourth embodiment of the present invention; this is distinguished from the second embodiment in that an anode electrode 14C is woven and knitted a line material 29 which is performed plating of platinum for a titanium plate, the anode electrode being formed on a mesh and in the shape of a cylinder, and the anode electrode being provided into the intermediate electrolytic chamber 3A of the electrolytic cell 1. A device for producing ion water 27C according to the fourth embodiment will provide the same function as of the second invention.

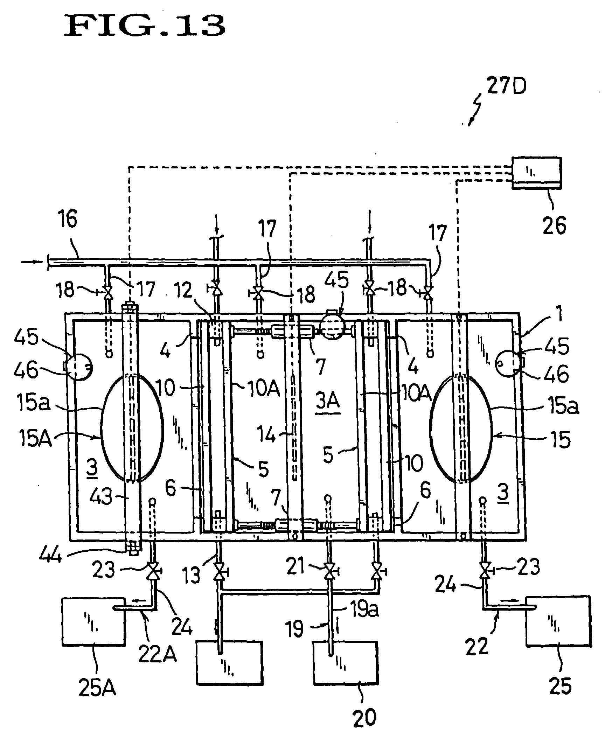

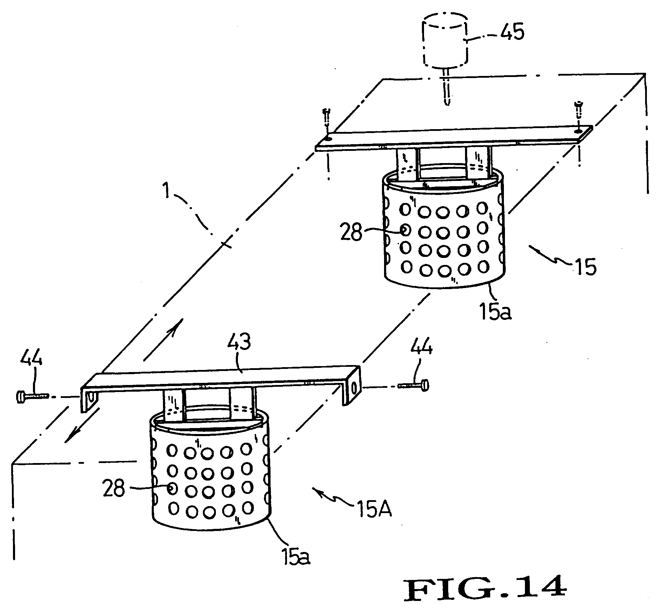

Figs. 13 and 14 illustrate the fifth embodiment of the present invention; this is distinguished from the first embodiment in that the non-movable cathode electrode 15 and movable cathode electrode 15A are replaced from other cathode electrodes 15 and 15A. The cathode electrode 15 and 15A include electrode plates 15a and 15a formed in the shape of an oval-shaped cylinder, performed plating of platinum for the titanium plate, having a plurality of holes 28 into the electrolytic chambers 3 and 3 located at both side portions of the electrolytic cell 1. A device for producing ion water 27D according to the fifth embodiment will provide the same function as of the first embodiment of the present invention.

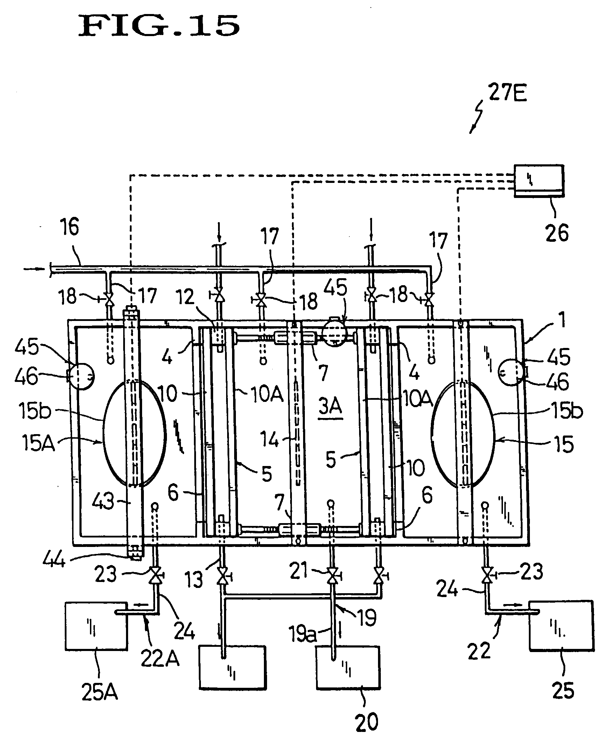

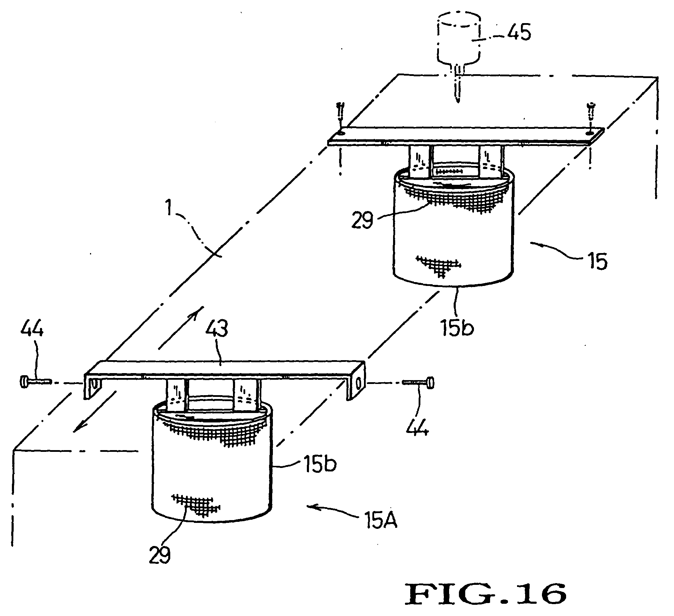

Figs. 15 and 16 illustrate the sixth embodiment of the present invention which is distinguished from the fifth embodiment by the fact that the non-movable cathode electrode 15 and movable cathode electrode 15A are replaced from other cathode electrodes 15 and 15A. The cathode electrode 15 and 15A include electrode plates 15a and 15a formed in the shape of an oval-shaped cylinder which are woven and knitted a linear material 29 which is performed plating of platinum for a titanium plate and is formed on mesh. A device for producing ion water 27E according to the sixth embodiment will provide the same function as of the fifth embodiment of the present invention.

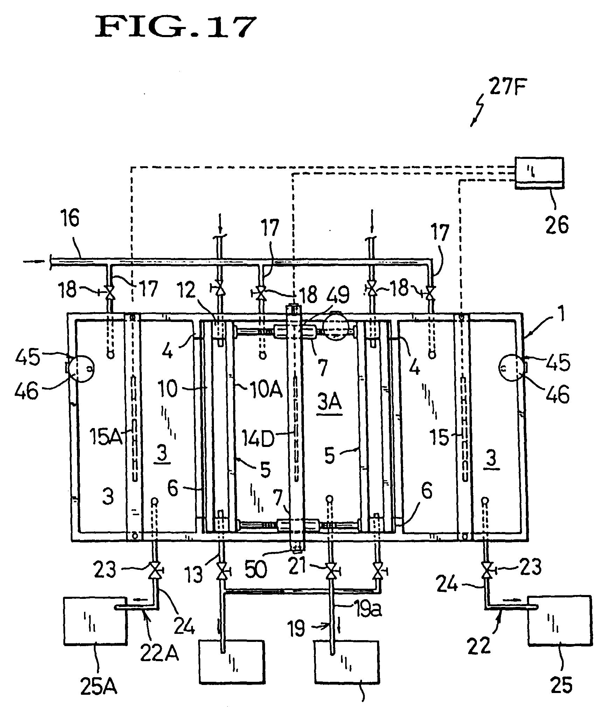

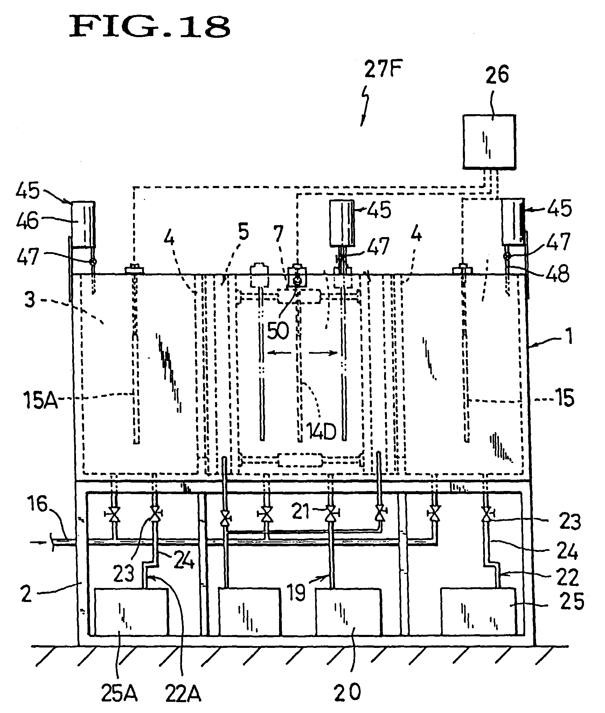

Figs. 17 and 18 illustrate the seventh embodiment of the present invention; this is distinguished from the first embodiment in that cathode electrodes 15 and 15 located at both side portions of the electrolytic cell 1, an anode electrode 14D is provided with anode electrode support member 45 locking by locking bolts 46 and 46 into the electrolytic chamber 3A of the electrolytic cell 1 such that the anode electrode 14D is positioned optionally. A device for producing ion water 27F according to the seventh embodiment will provide the same function as of the first embodiment of the present invention.

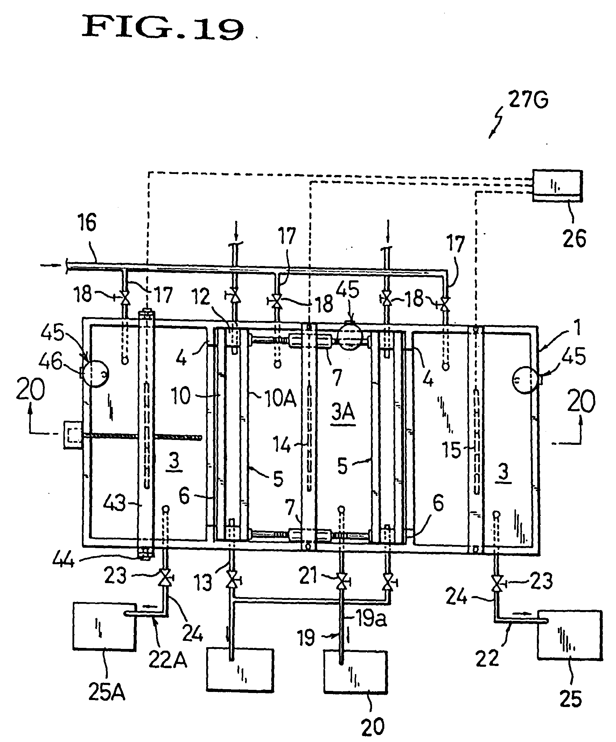

Figs. 19 to 21 illustrate the eighth embodiment of the present invention; this is distinguished from the first embodiment in that a cathode electrode support member 43 is provided so as to move glidingly on upper portion of the electrolytic cell 1, and a moving equipment 33 of the cathode electrode support member 43 is used in this embodiment. The moving equipment 33 allows a screw shaft 31 with meshing a screw hole 30 formed adjacent a center portion of the cathode electrode support member 43 to rotate forward and backward by a reversible motor 32 provided to the electrolytic cell 1. A device for producing ion water 27G according to the eighth embodiment will provide the same function as of the first embodiment of the present invention.

Additionally, this device 27G can perform to electrolyze by allowing the cathode electrode support member 43 to move as far as the fixed position after the subjects such as clothing adheres the removable substance is stored into the electrolytic chamber 3 because the cathode electrode support member 43 moves glidingly by the moving equipment 33 and the device 27G performs to electrolyze owing to broad the opening of the electrolytic chamber 3 in the electrolytic cell 1.

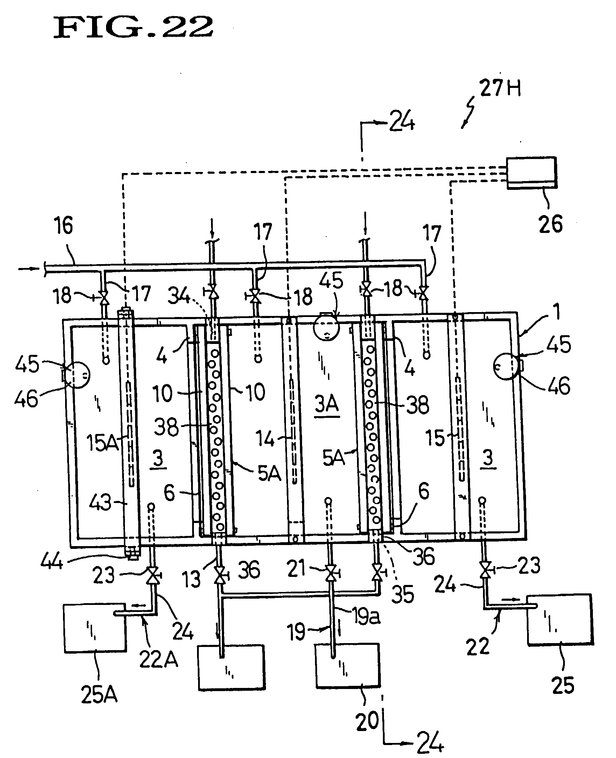

Figs. 22 to 25 illustrate the ninth embodiment of the present invention; this is distinguished from the fifth embodiment in that two partition walls 5A and 5A comprise respectively a frame 36 formed in U-shape; a pair of partition wall bodies 10 and 10; and an equalizing plates 38,38,38. The frame 36 further comprises a channel 34 formed at the one side wall thereof, forming from upper portion to lower portion thereof, the channel 34 supplying to raise ion concentration; and a spout 35 formed at upper portion of another side wall. The pair of partition wall bodies 10 and 10 are fixed by a plurality of screws 37 so as to cove both sides of the frame 36, having the cation exchange membranes 8 and anion exchange membranes 9. At least one equalizing plate 38, which three pieces of equalizing plates 38 are used in his embodiment of the present invention, provide into the frame 36 covered by the partition wall bodies 10,10 and are plates having holes. A device for producing ion water 27H according to the ninth embodiment will provide the same function as of the fifth embodiment of the present invention; in addition, water to raise ion concentration supplied into the partition walls 5A and 5A flow from the lower portion to upper portion in order, so that the device 27H allows the ion included in water perform in efficiency.

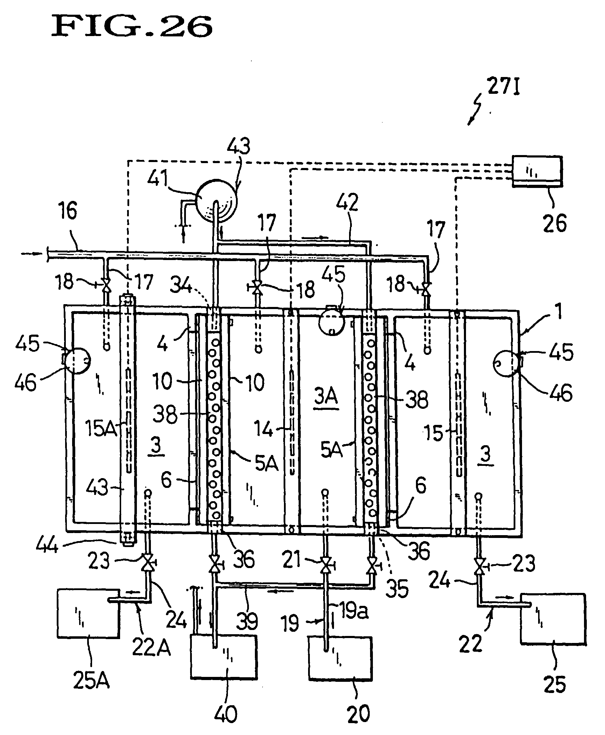

Figs. 26 to 28 illustrate the tenth embodiment of the present invention; this is distinguished from the ninth embodiment in that overflow water discharged from the spouts 35 and 35 of the partition walls 5A and 5A is collected into an overflow water collecting tank 40 through a hose-pipe 39. Additionally, an overflow water supplying device 43 includes a supplying hose-pipe 42 interposed between a pump 41 and the device 43 can supply the overflow water in the overflow water collecting tank 40 into the electrolytic chamber 3A. A device for producing ion water 27I according to the tenth embodiment of the present invention can produce acid ion water in efficiency by supplying overflow water having pH at the rate 5 to 6 and used in order to raise ion concentration into the electrolytic chamber 3A which produces acid ion water; in addition, the device 27I can reuse the discharged water in efficiency.

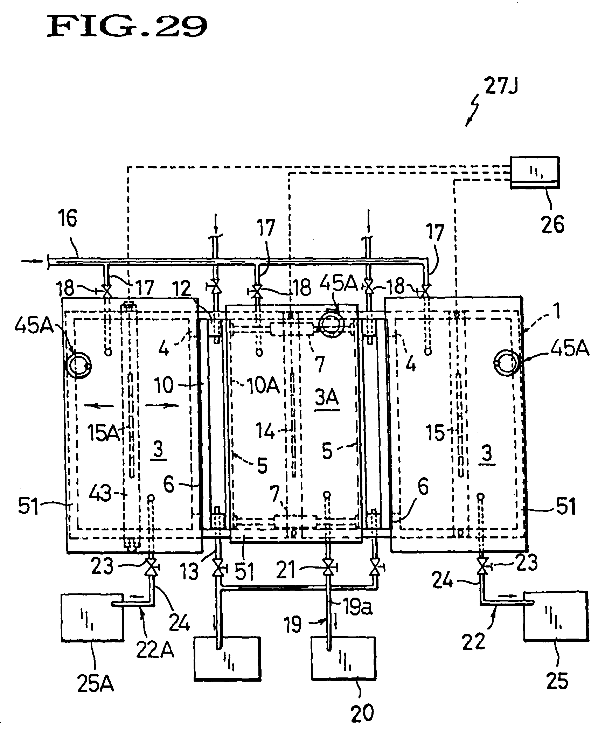

Figs. 29 to 31 illustrate the eleventh embodiment of the present invention; this is distinguished from the first embodiment in that the electrolytic chambers 3,3A,3 are provided closure members 51,51,51 at an upper portion thereof, the closure members 51 being capable of opening and shutting at the upper portion, and the closure member 51 includes spicery-supplying devices 45A,45A,45A which have spray cans can supply gaseous spice into the electrolytic chambers 3,3A,3 when the closure members 51 close at the upper portion of the electrolytic chambers 3,3A,3. A device for producing ion water 27J having a spicery-supplying device 45A according to the eleventh embodiment will provide the same function as of the first embodiment of the present invention.

Additionally, in each of the embodiments, the movable cathode electrode 15A or the movable anode electrode 14D is explained, however, the cathode electrode and anode electrode may be provided fixedly to the electrolytic cell 1.

### ADVANTAGES OF THE INVENTION

As set forth above, the advantages of the present invention are as follows:
(1) A device for producing ion water comprises an electrolytic cell which can be electrolyzed; two units of partition walls disposed such that the electrolytic cell is partitioned in three pieces of electrolytic chambers therein, having ion exchange membranes; an anode electrode provided in an intermediate electrolytic chamber of the electrolytic cell; a cathode electrodes provided in the electrolytic chambers located at both sides in the electrolytic cell, respectively, the cathode electrodes being flowed half amount of an electric current which is flowed to the anode electrode therein, respectively; and a spicery-supplying device supplies a liquid or gaseous spice into the intermediate electrolytic chamber or at least one electrolytic chamber located at both side portions of said electrolytic cell and can be produced alkaline or acid ion water that is adhered to a smell. so that the generative quantity of hydrogenous ion can be balanced by controlling the quantity of electricity of turning on electricity.
   Therefore, the desired pH of the ion can be controlled.
(2) As discussed above, anion and cation that moved electric charge by an electrolysis reaction can be separated and picked by the ion exchange membrane.
(3) As discussed above, the device can performed easily because it has a simple structure.
(4) Since a cation exchange membrane and an anion ion exchange membrane are respectively provided for two pieces of partition walls, it can be generated on pure acid ion water and alkaline ion water.
(5) The quantity of turning on electricity is made to increase by the water which is supplied to the partition walls, and the balance regulation of promotion or fall of the generative quantity of hydrogenous ion or a fall may be controlled, and a density of ion can be raised.

## Claims

1. A device for producing ion water comprising:
an electrolytic cell which can be electrolyzed;
two units of partition walls disposed such that the electrolytic cell is partitioned in three pieces of electrolytic chambers therein, having ion exchange membranes;
an anode electrode provided in an intermediate electrolytic chamber of said electrolytic cell;
a cathode electrodes provided in the electrolytic chambers located at both sides in the electrolytic cell, respectively, the cathode electrodes being flowed half amount of an electric current which is flowed to the anode electrode therein, respectively; and
a spicery-supplying device supplies a liquid or gaseous spice into the intermediate electrolytic chamber or at least one electrolytic chamber located at both side portions of said electrolytic cell and can be produced alkaline or acid ion water that is adhered to a smell.

2. A device for producing ion water according to claim 1, wherein said partition walls have a cation exchange membrane and an anion exchange membrane.

3. A device for producing ion water according to claim 1, wherein said partition walls further comprise a pair of partition wall bodies having a cation exchange membrane and an anion exchange membrane; a water chamber provided between the partition walls; and a water supplying equipment supplies a water into the water chamber in order to get ion density better.

4. A device for producing ion water according to claim 1, wherein the partition walls further comprises a partition wall body in the shape of a box having a cation exchange membrane and anion exchange membrane; a water supplying equipment supplies water to raise an ion concentration into the partition wall body from a lower portion thereof; at least one or more equalizing plates provided into the partition wall body, the equalizing plates affecting so as to equalize the water supplied into said partition wall; and a collecting equipment for overflow water provided at upper portion of said partition wall.

5. A device for producing ion water according to claim 1, wherein the anode electrode includes at least two electrode plates that are plated a titanium plate with platinum, having a plurality of holes therein.

6. A device for producing ion water according to claim 1, wherein the anode electrode includes an electrode plates which is plated a titanium plate in the shape of a cylinder with platinum, the titanium plate being formed of a mesh or having a plurality of holes.

7. A device for producing ion water according to claim 1, the wherein the cathode electrode includes an electrode plate which is plated a titanium plate with a platinum, the titanium plate being formed of a mesh or having a plurality of holes.

8. A device for producing ion water according to claim 1, the wherein the cathode electrode includes an electrode plate which is plated a titanium plate in the shape of a cylinder with a platinum, the titanium plate being formed of a mesh or having a plurality of holes.

9. A device for producing ion water comprising:
an electrolytic cell which can be electrolyzed;
two units of partition walls disposed such that the electrolytic cell is partitioned in three pieces of electrolytic chambers therein, having ion exchange membranes;
an anode electrode provided in an intermediate electrolytic chamber of said electrolytic cell;
two pieces of cathode electrodes provided in the electrolytic chambers located at both side portions in the electrolytic cell, the cathode electrodes being flowed half amount of an electric current which is flowed to the anode electrode therein respectively;
at least said anode or said cathode electrodes which can adjust so as to move, being changed the distance between said anode and cathode electrode;
a spicery-supplying device supplies a liquid or gaseous spice into the intermediate electrolytic chamber or at least said electrolytic chamber located at both side portions of said intermediate chamber and can be produced alkaline or acid ion water that is adhered to a smell.
